# EUROPÄISCHE PATENTANMELDUNG

(11) **EP 0 806 443 A2**
(43) Veröffentlichungstag der Anmeldung: **12.11.1997**
(21) Anmeldenummer: 97107045.3
(22) Anmeldetag: 29.04.1997
(51) Int. Cl.: C08G 18/08, C08G 18/10, C08G 18/70, C08G 18/32, C09J 175/12

(54) **Wässerige Dispersionen enthaltend ein Polyurethan, ein Polyisocyanat und ein tertiäres Alkanolamin**

(30) Priorität: 08.05.1996 DE 19618389
(71) Anmelder: BASF AKTIENGESELLSCHAFT, 67056 Ludwigshafen (DE)
(72) Erfinder: Wüstefeld, Renate, Dr., 67105 Schifferstadt (DE); Licht, Ulrike, Dr., 68163 Mannheim (DE)

(57) **Zusammenfassung**

Wässerige 2K-Dispersionen enthaltend
a) ein Polyurethan, das anionische Gruppen trägt, die die Wasserdispergierbarkeit des Polyurethans bewirken (Komponente a),
b) 0,04 bis 1,5 mol NCO-Gruppen in Form eines wasseremulgierbaren Polyisocyanates (Komponente b) pro kg der Komponente (a) und
c) 0,05 bis 40 mol tertiäre Aminogruppen in Form eines tertiären Alkanolamins (Komponente c) pro mol NCO-Gruppen in Form der Komponente (b).

## Beschreibung

Die vorliegende Erfindung betrifft
Wässerige 2K-Dispersionen enthaltend
a) ein Polyurethan, das anionische Gruppen trägt, die die Wasserdispergierbarkeit des Polyurethans bewirken (Komponente a),
b) 0,04 bis 1,5 mol NCO-Gruppen in Form eines wasseremulgierbaren Polyisocyanates (Komponente b) pro kg der Komponente (a) und
c) 0,05 bis 40 mol tertiäre Aminogruppen in Form eines tertiären Alkanolamins (Komponente c) pro mol NCO-Gruppen in Form der Komponente (b).

Weiterhin betrifft die Erfindung Verfahren zur Verklebung von Gegenständen unter Verwendung dieser Mischungen.

Polyurethandispersionen mit anionischen Gruppen und deren Verwendung als Klebstoffe sind allgemein bekannt (vgl. D. G. Oertel "Kunststoff Handbuch 7", 2. Auflage, 1983, Carl Hanser Verlag München Wien, S. 24 bis 25, S. 571 bis 574 und S. 591 bis 592).

Weiterhin sind 2-Komponenten-Klebstoffmischungen (2K-Systeme) bekannt, die eine Polyurethandispersion und ein wasseremulgierbares Isocyanat enthalten. Die mit den 2K-Systemen hergestellten Klebstoffverbunde sind denjenigen, die nur unter Verwendung der Polyurethandispersion hergestellt wurden, überlegen, was die Festigkeit, insbesondere die Festigkeit unter Wärmeeinfluß (Wärmestandfestigkeit) betrifft (vgl. EP-A-206059). Die 2K-Systeme müssen jedoch innerhalb eines bestimmten Zeitraumes nach der Vermischung der beiden Komponenten (innerhalb der sog. Topfzeit) verarbeitet werden, da die Klebstoffverbunde ansonsten eine unzureichende Festigkeit aufweisen. Diese 2K-Systeme weisen den Nachteil auf, daß sie nach Überschreitung der offenen Zeit irreversibel geschädigt sind, so daß sich mit ihnen keine Verklebungen mehr herstellen lassen, die besonderen Anforderungen an die Wärmestandfestigkeit genügen.

Von den Klebstoffverarbeitern werden weiterhin 2K-Systeme mit einer möglichst langen Topfzeit gewünscht, da die Topfzeit den Verarbeiter in seiner Arbeitsorganisation einschränkt und die Gefahr besteht, daß bei Pausen zwischen 2 Arbeitszyklen Klebstoffreste unbrauchbar werden.

Die Aufgabe der vorliegenden Erfindung bestand deshalb darin, ausgehend von üblichen Polyurethandispersionen 2Komponenten-Klebstoffmischungen auf der Basis von Polyurethandispersionen und wasseremulgierbaren Polyisocyanaten bereitzustellen, die eine besonders lange Topfzeit aufweisen und mit denen sich besonders wärmestandfeste Verklebungen herstellen lassen.

Weiterhin bestand die Aufgabe darin, solche Klebstoffdispersionen zur Verfügung zu stellen, die sich nach der Überschreitung der Topfzeit wieder reaktivieren lassen, d.h. solchen, die nach der Überschreitung der Topfzeit wieder in eine Form überführbar sind, mit der sich wärmestandfeste Verklebungen herstellen lassen.

Demgemäß wurden die eingangs definierten wässerigen Klebstoffdispersionen gefunden sowie Verfahren zu deren Herstellung und Reaktivierung.

Wässerige 2K-Dispersionen enthaltend
a) ein Polyurethan, das anionische Gruppen trägt, die die Wasserdispergierbarkeit des Polyurethans bewirken (Komponente a),
b) 0,04 bis 1,5, bevorzugt 0,09 bis 1 mol NCO-Gruppen in Form eines wasseremulgierbaren Polyisocyanates (Komponente b) pro kg der Komponente (a) und
c) 0,05 bis 40 mol, bevorzugt 0,05 bis 20 mol tertiäre Aminogruppen in Form eines tertiären Alkanolamins (Komponente c) pro mol NCO-Gruppen in Form der Komponente (b).

Als Komponente (a) kommen die Polyurethane in Betracht, die in handelsübliche wässerige anionische Polyurethandispersionen enthalten sind.

Die Komponente (a) wird üblicherweise in Form einer wässerigen Dispersion bereitgestellt.

Die Komponenten (a) sind bevorzugt aufgebaut aus
a1) Diisocyanaten mit 4 bis 30 C-Atomen,
a2) Diolen, von denen
   a2.1) 10 bis 100 mol-%, bezogen auf die Gesamtmenge der Diole (a2), ein Molekulargewicht von 500 bis 5000 aufweisen, und
   a2.2) 0 bis 90 mol-%, bezogen auf die Gesamtmenge der Diole (a2), ein Molekulargewicht von 60 bis 500 g/mol aufweisen,
a3) von den Monomeren (a1) und (a2) verschiedene Monomere mit wenigstens einer Isocyanatgruppe oder wenigstens einer gegenüber Isocyanatgruppen reaktiven Gruppe, die darüber hinaus wenigstens eine anionische Gruppe oder eine potentiell anionische Gruppe tragen, wodurch die Wasserdispergierbarkeit der Polyurethane bewirkt wird und
a4) gegebenenfalls weiteren von den Monomeren (a1) bis (a3) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
a5) gegebenenfalls von den Monomeren (a1) bis (a3) verschiedenen einwertigen Verbindungen mit einer reaktiven Gruppe, bei der es sich um eine alkoholische Hydroxylgruppe, eine primäre oder sekundäre Aminogruppen oder eine Isocyanatgruppe handelt. Als Monomere (a1) kommen die üblicherweise in der Polyurethanchemie eingesetzten Diisocyanate in Betracht.

Insbesondere zu nennen sind Diisocyanate X(NCO)₂, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methan sowie aus diesen Verbindungen bestehende Gemische.

Als Gemische dieser Isocyanate sind besonders die Mischungen der jeweiligen Strukturisomeren von Diisocyanatotoluol und Diisocyanato-diphenylmethan von Bedeutung, insbesondere die Mischung aus 80 mol-% 2,4 Diisocyanatotoluol und 20 mol-% 2,6-Diisocyanatotoluol geeignet. Weiterhin sind die Mischungen von aromatischen Isocyanaten wie 2,4 Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Im Hinblick auf gute Filmbildung und Elastizität kommen als Diole (a2) vornehmlich höhermolekulare Diole (a2.1), die ein Molekulargewicht von etwa 500 bis 5000, vorzugsweise von etwa 100 bis 3000 g/mol haben.

Bei den Diolen (a2.1) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, z.B. Bernsteinsäure, Adipinsäure, Dodecandicarbonsäure und Sebacinsäure.

Als mehrwertige Alkohole kommen z.B. Ethylenglykol, Propan-1,2-diol, Propan-1,3-diol, Butan-1,3-diol, Buten-1,4-diol, Butin1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist. Beispiele sind ε-Caprolacton, β-Propiolacton, gamma-Butyrolacton und/oder Methyl-ε-caprolacton sowie deren Gemische.

Daneben kommen als Monomere (a2.1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 1,2-Bis(4-hydroxydiphenyl)-propan oder Anilin erhältlich. Besonders bevorzugt ist Polytetrahydrofuran eines Molekulargewichts von 240 bis 5000, und vor allem 500 bis 4500.

Die Polyolole können auch als Gemische im Verhältnis 0,1 : 1 bis 1 : 9 eingesetzt werden.

Die Härte und der Elastizitätsmodul der Polyurethane läßt sich erhöhen, wenn als Diole (a2) neben den Diolen (a2.1) noch niedermolekulare Diole (a2.2) mit einem Molekulargewicht von etwa 62 bis 500, vorzugsweise von 62 bis 200 g/mol, eingesetzt werden.

Als Monomere (a2.2) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen bevorzugt werden.

Bevorzugt beträgt der Anteil der Diole (a2.1), bezogen auf die Gesamtmenge der der Diolen (a2) 10 bis 100 mol-% und der Anteil der Monomere (a2.2), bezogen auf die Gesamtmenge der der Diolen (a2) 0 bis 90 mol-%. eingesetzt. Besonders bevorzugt beträgt das Verhältnis der Diole (a2.1) zu den Monomeren (a2.2) 0,2 : 1 bis 5:1, besonders bevorzugt 0,5 : 1 bis 2 : 1.

Um die Wasserdispergierbarkeit der Polyurethane zu erreichen, sind die Polyurethane neben den Komponenten (a1), (a2) und (a4) aus von den Komponenten (a1), (a2) und (a4) verschiedenen Monomere (a3), die wenigstens eine Isocyanatgruppe oder wenigstens eine gegenüber Isocyanatgruppen reaktiven Gruppe und darüberhinaus wenigstens eine hydrophile Gruppe oder eine Gruppe, die sich in hydrophile Gruppen überführen läßt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer, als die funktionellen Gruppen der Monomere, die zum Aufbau der Polymerhauptkette dienen.

Der Anteil der Komponenten mit anionischen oder potentiell anionischen Gruppen ((potentiell) anionischen Gruppen) an der Gesamtmenge der Komponenten (a1), (a2), (a3) und (a4) wird im allgemeinen so bemessen, daß die Molmenge der (potentiell) anionischen Gruppen, bezogen auf die Gewichtsmenge aller Monomere (a1) bis (a4), 30 bis 1000, bevorzugt 50 bis 500 und besonders bevorzugt 80 bis 300 mmol/kg beträgt.

Geeignete anionische Gruppen sind vor allem die Sulfonat-, die Carboxylat- und die Phosphatgruppe in Form ihrer Alkalimetall- oder Ammoniumsalze.

Potentiell anionische hydrophile Gruppen sind vor allem solche, die sich durch einfache Neutralisations-, oder Hydrolysereaktionen in die oben genannten anionischen hydrophilen Gruppen überführen lassen, also z.B. Carbonsäuregruppen oder Anhydridgruppen.

(Potentiell) ionische Monomere (a3) sind z.B. in Ullmanns Encyklopädie der technischen Chemie, 4. Auflage, Band 19, S.311-313 und beispielsweise in der DE-A 1 495 745 ausführlich beschrieben.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel 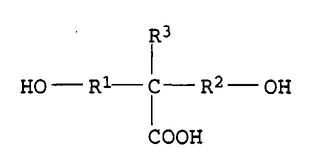 in welcher R¹ und R² für eine C₁- bis C₄-Alkandiyl-Einheit und R³ für eine C₁- bis C₄-Alkyl-Einheit steht und vor allem Dimethylolpropionsäure (DMPA) bevorzugt.

Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 3 911 827 bekannt sind.

Als Monomere (a3) mit gegenüber Isocyanaten reaktiven Aminogruppen kommen Aminocarbonsäuren wie Lysin, β-Alanin, die in der DE-A2034479 genannten Addukte von aliphatischen diprimären Diaminen an α,β-ungesättigte Carbonsäuren wie die N-(2-Aminoethyl)-2-aminoethancarbonsäure sowie die entsprechenden N-Aminoalkyl-aminoalkylcarbonsäuren, wobei die Alkandiyl-Einheiten aus 2 bis 6 Kohlenstoffatome bestehen, in Betracht.

Sofern Monomere mit potentiell ionische Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die Carboxylatgruppen in Form ihrer Salze mit einem Alkaliion oder einem Ammoniumion als Gegenion vor.

Die Monomere (a4), die von den Monomeren (a1) bis (a3) verschieden sind, dienen im allgemeinen der Vernetzung oder der Kettenverlängerung. Es sind im allgemeinen mehr als zweiwertige nicht-aromatische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundären Aminogruppen tragen.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, daß man Präpolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei primäre, zwei sekundäre oder eine primäre und eine sekundäre Aminogruppe enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-1 129 128), Ketazine (vgl. z.B. die US-A 4 269 748) oder Aminsalze (s. US-A 4 292 226) eingesetzt werden.

Bevorzugt werden Gemische von Di- und Triaminen verwendet, besonders bevorzugt Gemische von Isophorondiamin und Diethylentriamin.

Die Polyurethane enthalten bevorzugt kein Polyamin oder 1 bis 10, besonders bevorzugt 4 bis 8 mol-%, bezogen auf die Gesamtmenge der Komponenten (a2) und (a4) eines Polyamins mit mindestens 2 gegenüber Isocyanaten reaktiven Aminogruppen als Monomere (a4).

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Für den gleichen Zweck können auch als Monomere (a4) dreiwertige und vierwertige Isocyante eingesetzt werden. Handelsübliche Verbindungen sind beispielsweise das Isocyanurat oder das Biuret des Hexamethylendiisocyanats.

Monomere (a5), die gegebenenfalls mitverwendet werden, sind Monoisocyanate, Monoalkohole und Mono- primäre und sekundäre Amine. Im allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-α,α-dimethylbenzylisocyanat (TMI) und Ester von Acryl- oder Methacrylsäure wie Hydroxyethylacrylat oder Hydroxyethylmethacrylat.

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (a1), (a2), (a3) und (a4) sowie ihre jeweiligen Molmengen so gewählt, daß das Verhältnis A : B mit
A) der Molmenge an Isocyanatgruppen und
B) der Summe aus der Molmenge der Hydroxylgruppen und der Molmenge der funktionellen Gruppen, die mit Isocyanaten in einer Additionsreaktion reagieren können
0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Neben den Komponenten (a1), (a2), (a3) und (a4) werden Monomere mit nur einer reaktiven Gruppe im allgemeinen in Mengen bis zu 15mol-%, bevorzugt bis zu 8 mol-%, bezogen auf die Gesamtmenge der Komponenten (a1), (a2), (a3) und (a4) eingesetzt.

Die eingesetzten Monomere (a1) bis (a4) tragen im Mittel üblicherweise 1,5 bis 2,5, bevorzugt 1,9 bis 2,1, besonders bevorzugt 2,0 Isocyanatgruppen bzw. funktionellen Gruppen, die mit Isocyanaten in einer Additionsreaktion reagieren können.

Die Polyaddition der Komponenten (a1) bis (a4) erfolgt im allgemeinen nach den bekannten Verfahren, wobei bevorzugt das sog. "Acetonverfahren" oder das Präpolymermischverfahren", die beispielsweise aus der DE-A-4418157 bekannt sind, angewendet wird.

Dabei geht man im allgemeinen so vor, daß man zunächst in einem inerten organische Lösungsmittel ein Präpolymer oder das Polyurethan (a) herstellt und anschließend das Präpolymer oder das Polyurethan (a) in Wasser dispergiert. Im Falle des Präpolymeren erfolgt die Umsetzung zum Polyurethan (a) durch Reaktion mit dem Wasser oder durch ein nachträglich zugegebenes Amin (Komponente a4). Üblicherweise wird das Lösungsmittel nach der Dispergierung destillativ ganz oder teilweise entfernt.

Die Dispersionen haben im allgemeinen einen Feststoffgehalt von 10 bis 75, bevorzugt von 20 bis 65 Gew.-% und eine Viskosität von 10 bis 500 m Pas (gemessen bei einer Temperatur von 20°C und einer Schergeschwindigkeit von 250 s⁻¹).

Hydrophobe Hilfsmittel, die unter Umständen nur schwierig homogen in der fertigen Dispersion zu verteilen sind wie beispielsweise Phenol-Kondensationharze aus Aldehyden und Phenol bzw. Phenolderivaten oder Epoxidharze und weitere z.B. in der DE-A3903538, 43 09 079 und 40 24 567 genannten Polymere, die in Polyurethandispersionen beispielsweise als Haftungsverbesserer dienen, können nach den in den beiden oben genannten Schriften beschriebenen Methoden dem Polyurethan oder dem Präpolymeren bereits vor der Dispergierung zugesetzt werden.

Als wasseremulgierbare Isocyanate (Komponente (b))kommen ebenfalls die allgemein bekannten, z.B. die in der EP-A-0206059 deutschen Patentanmeldung P 4429446.8 beschriebenen in Betracht.

Dabei handelt es sich um (cyclo)aliphatische oder aromatische Diisocyanate oder höherfunktionelle Polyisocyanate (b1), welche zum Teil mit Verbindungen mit mindestens einer hydrophilen Gruppe und mit mindestens einer gegenüber Isocyanat reaktiven Gruppen umgesetzt sind (Verbindungen b2).

Als Polyisocyanate (b1) kommen z.B. geradlinige oder verzweigte C₄-C₁₄-Alkylendiisocyanate, cycloaliphatische Diisocyanate mit insgesamt 6 bis 12C-Atomen, aromatische Diisocyanate mit insgesamt 8 bis 14C-Atomen, Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretonimin-modifizierte Polyisocyanate oder deren Gemische in Betracht.

Als Diisocyanate (b1) werden bevorzugt die gleichen eingesetzt, die auch für die Herstellung der Komponente (a) in Betracht kommen.

Als mehr als zweiwertige Polyisocyanate (b1) seien z.B. mehrkernige Homologe der vorstehend genannten aromatischen Diisocyanate genannt.

Bevorzugt sind aliphatische bzw. cycloaliphatische Polyisocyanate, z.B. die vorstehend genannten Diisocyanate, deren Mischungen oder
b1.1) Isocyanuratgruppen aufweisende Polyisocyanate von aliphatischen und/oder cycloaliphatischen Diisocyanaten. Besonders bevorzugt sind hierbei die entsprechenden Isocyanato-Isocyanurate auf Basis von Hexamethylendiisocyanat und Isophorondiisocyanat. Bei den vorliegenden Isocyanuraten handelt es sich insbesondere um einfache Tris-isocyanatoalkyl- bzw. Tris-isocyantocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 3 bis 4,5.
b1.2) Uretdiondiisocyanate mit aliphatisch und/oder cycloaliphatisch gebundenen Isocyanatgruppen, vorzugsweise von Hexamethylendiisocyanat oder Isophorondiisocyanat abgeleitet. Bei Uretdiondiisocyanaten handelt es sich um cyclische Dimerisierungsprodukte von Diisocyanaten.

Die Uretdiondiisocyanate können in den erfindungsgemäßen Zubereitungen als alleinige Komponente oder im Gemisch mit anderen Polyisocyanaten, insbesondere den unter b1.1) genannten, eingesetzt werden.
b1.3) Biuretgruppen aufweisende Polyisocyanate mit aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 3 bis 4,5 auf.
b1.4) Urethan- und/oder Allophanatgruppen aufweisende Polyisocyanate mit aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit einfachen mehrwertigen Alkoholen wie z.B. Trimethylolpropan, Glycerin, 1,2-Dihydroxypropan oder deren Gemischen erhalten werden können. Diese Urethan- und/oder Allophanatgruppen aufweisenden Polyisocyanate haben im allgemeinen einen NCO-Gehalt von 12 bis 20Gew.-% und eine mittlere NCO-Funktionalität von 2,5 bis 3.
b1.5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.
b1.6) Uretonimin-modifizierte Polyisocyanate.

Die Polyisocyanate (b1.1) bis (b1.6) können im Gemisch, gegebenenfalls auch im Gemisch mit Diisocyanaten, eingesetzt werden.

Zur Herstellung der wasseremulgierbaren Polyisocyanate werden die oben bezeichneten Polyisocyanate (b1) umgesetzt mit Verbindungen (b2), die mindestens eine, vorzugsweise eine hydrophile Gruppe und mindestens eine, vorzugsweise eine mit Isocyanat reaktive Gruppen, z.B. eine Hydroxy-, Mercapto- oder primäre oder sekundäre Aminogruppe (kurz NH-Gruppe) aufweisen.

Bei der hydrophilen Gruppe kann es sich z.B. um eine ionische oder in eine ionische Gruppe überführbare Gruppe handeln.

Anionische bzw. in anionische Gruppen überführbare Gruppen sind z.B. saure Gruppen wie Carbonsäure- oder Sulfonsäuregruppen die neutralisiert werden.

Geeignete Verbindungen (b2) sind z.B. Hydroxycarbonsäuren, wie Hydroxypivalinsäure oder Dimethylolpropionsäure oder Hydroxy- bzw. Aminsulfonsäuren.

In ionische Gruppen überführbare Gruppen werden vorzugsweise vor oder während der Dispergierung der erfindungsgemäßen Mischung in Wasser in ionische Gruppen überführt.

Zur Überführung z.B. von Carbonsäuregruppen oder Sulfonsäuregruppen in anionische Gruppen können anorganische und/oder organische Basen wie Natriumhydroxid, Kaliumhydroxid, Kaliumcarbonat, Natriumhydrogencarbonat, Ammoniak oder primäre, sekundäre und besonders tertiäre Amine, z.B. Triethylamin oder Dimethylaminoethanol eingesetzt werden.

Geeignete Neutralisationsmittel sind auch die Alkanolamine, die als Komponente (c) eingesetzt werden. Stöchiometrische oder unterstöchiometrische Mengen an Alkanolaminen, bezogen auf die zu neutralisierende Menge an sauren Gruppen, mit denen diese sauren Gruppen neutralisiert werden, werden nicht auf die definitionsgemäße Menge an Komponente (c) angerechnet, da dieser Anteil dann im wesentlichen nicht mehr als freie Basen vorliegt. Nichtionische Gruppen sind z.B. Polyalkylenethergruppen, insbesondere solche mit 10 bis 80 Alkylenoxideinheiten. Bevorzugt sind Polyethylenethergruppen oder Polyalkylenethergruppen, die neben anderen Alkylenoxideinheiten, z.B. Propylenoxid, mindestens 10 Ethylenoxideinheiten enthalten.

Geeignete Verbindungen sind z.B. Polyalkylenetheralkohole.

Der Gehalt der hydrophilen nichtionischen Gruppen, insbesondere der Polyalkylenethergruppen beträgt vorzugsweise 0,5 bis 20, besonders bevorzugt 1 bis 15Gew.-%, bezogen auf die wasseremulgierbaren Polyisocyanate.

Die Herstellung der wasseremulgierbaren Polyisocyanate ist aus der DE-A-3521618, DE-A-4001783 und DE-A-4203510 bekannt.

Bei der Herstellung der wasseremulgierbaren Polyisocyanate können die Verbindungen mit mindestens einer hydrophilen Gruppe und mindestens einer gegenüber Isocyanat reaktiven Gruppe mit einem Teil des Polyisocyanats umgesetzt und die erhaltenen hydrophil modifizierten Polyisocyanate dann mit den übrigen Polyisocyanaten gemischt werden. Die Herstellung kann aber auch so erfolgen, daß die Verbindungen zur Gesamtmenge der Polyiscocyanate zugesetzt wird und dann die Umsetzung "in situ" durchgeführt wird.

Bevorzugte wasseremulgierbare Polyisocyanate (b) sind solche mit hydrophilen, nichtionischen Gruppen, insbesondere Polyalkylenethergruppen. Vorzugsweise wird dabei die Wasseremulgierbarkeit allein durch die hydrophilen nichtionischen Gruppen erreicht.

Als tertiäre Alkanolamine (Komponente c) kommen insbesondere solche der allgemeinen Formel I 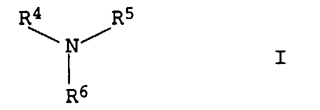 in der R⁴, R⁵ und R⁶ für Hydroxy C₁- bis C₆-alkyl, Polyethylen- oder Polypropylenoxid, bevorzugt mit 2 bis 5 Ethylen- oder Propylenoxy-Einheiten) C₁- bis C₆-Alkyl, C₅- bis C₁₀-Cycloalkyl, C₆- bis C₁₂-Aryl steht, in Betracht mit der Maßgabe, daß zumindest einer, bevorzugt 2 oder alle Reste R⁴, R⁵ oder R⁶ Polyethylen- oder Polypropylenoxid, bevorzugt mit 2 bis 5 Ethylen- oder Propylenoxideinheiten), Hydroxy-C₁- bis C₆-alkyl, bedeutet.

Bevorzugte Hydroxy C₁- bis C₆-alkylreste R⁴, R⁵ und R⁶ sind Hydroxymethyl, Hydroxyethyl und Hydroxypropyl (n- oder iso).

Als Komponente C kommen vor allem die folgenden Amine in Betracht:

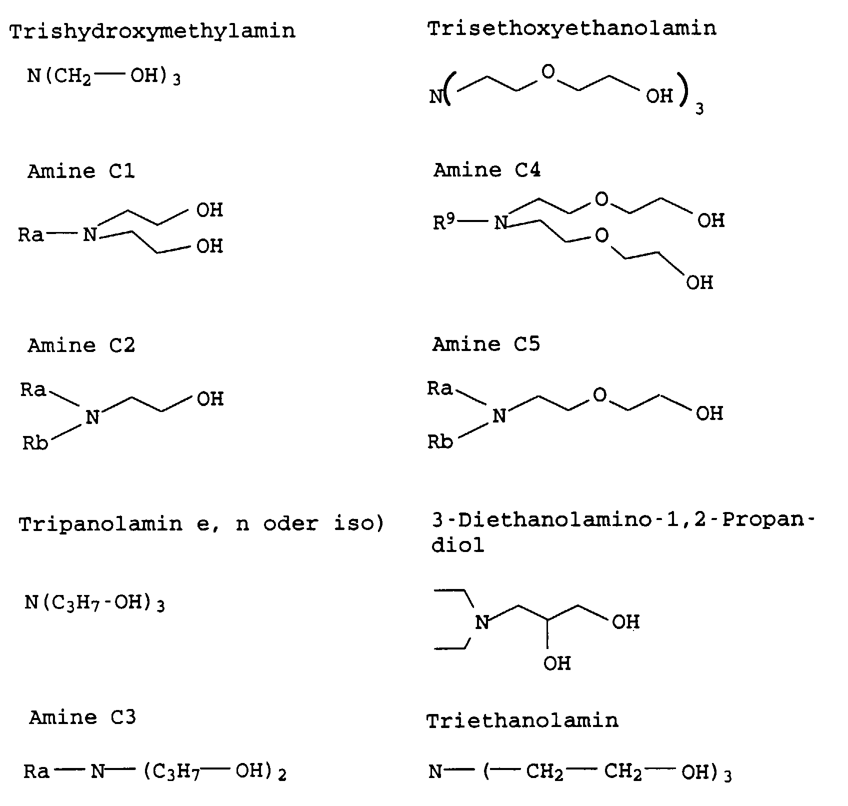

Bei den Aminen C1, C2, C3, C4, C5 bedeuten die Reste R^{a} bzw. R^{b} C₁- bis C₆-Alkyl, bevorzugt Methyl, Ethyl oder n- oder iso-propyl; C₅- bis C₁₀-Cycloalkyl oder C₆- bis C₁₀-Aryl.

Neben Triethanolamin ist Dimethylethanolamin und Monomethyldiethanolamin besonders bevorzugt.

Die erfindungsgemäßen wässerigen Dispersionen lassen sich auf einfache Weise durch Vermischung
a) einer wässerigen Dispersion, die ein Polyurethan enthält, das anionische Gruppen trägt, die die Wasserdispergierbarkeit des Polyurethans bewirken (Ausgangsdispersion a),
b) eines wasseremulgierbaren Polyisocyanates (Komponente b) und
c) eines tertiären Alkanolamins
herstellen. Die Art der Vermischung ist unkritisch und kann beispielsweise durch Verrühren erfolgen. Wässerige Dispersionen, die die Komponenten (a) und (c), jedoch noch nicht (b) enthalten, sind beliebig lange lagerbar. Die Vermischung von (a) und (c) kann deshalb auch schon vor der Dispergierung von (a) in Wasser zugesetzt werden. Die Komponente (b) wird wegen der begrenzten Topfzeit der Mischung zweckmäßigerweise unmittelbar vor Beginn der Verarbeitung hinzugefügt.

Die erfindungsgemäßen wässerigen 2K-Dispersion können handelsübliche Hilfs- und Zusatzstoffe wie Treibmittel, Entschäumer, Emulgatoren, Verdickungsmittel und Thixotropiermittel, Farbmittel wie Farbstoffe und Pigmente enthalten.

Die besten klebetechnischen Eigenschaften weisen solche sog. "frischen" 2K-Dispersionen auf, die aus "frischen" Ausgangsdispersionen (a) hergestellt wurden, d.h. solchen, denen zu keinem früheren Zeitpunkt wirksame Mengen der Komponente (b) zugesetzt wurde.

Falls die erfindungsgemäßen frischen wässerigen 2K-Dispersion zu lange gelagert werden, so daß deren Gehalt an NCO-Gruppen in Form der Komponente (b) von ursprünglich 0,05 bis 1,5 mol NCO-Gruppen in Form der Komponente (b) auf weniger als 50 mol-% NCO-Gruppen in Form der Komponente (b), bezogen auf die in der frischen wässerigen 2K-Dispersion absinkt, die Topfzeit also überschritten wird, innerhalb der sie verarbeitet werden sollen, entstehen sog. "gealterte" 2K-Dispersionen. Die gealterten 2K-Dispersionen lassen sich wieder reaktivieren und in die erfindungsgemäßen wässerigen 2K-Dispersion überführen, indem man sie erneut mit so viel NCO-Gruppen in Form der Komponente (b) versetzt, daß der Anteil der Komponente (b) 50 bis 200 mol-% NCO-Gruppen in Form der Komponente (b) pro kg der Komponente (a), bezogen auf die in der frischen wässerigen 2K-Dispersion beträgt.

Der NCO-Gehalt einer gealterten 2K-Dispersion läßt sich am einfachsten durch Aufnahme eines IR-Spektrums ermitteln. Das IR-Spektrum wird zweckmäßigerweise mit Hilfe eines kommerziellen FTIR-Gerätes aufgenommen, das mit einer horizontal liegenden ATR-Einheit (Attenuated Total Reflection-Einheit) ausgestattet ist. Die ATR-Methode ist beispielsweise aus H.H. Perkampus, Lexikon Spektroskopie VCH, 1993 bekannt. Für die Messung wird ein Tropfen der Dispersion auf den Kristall aufgebracht und mit einem Glasplättchen abgedeckt. Das Spektrum kann wie üblich aufgenommen werden. Bei der Betrachtung der NCO-Bande stört das Wasser nicht. Das Ergebnis dieser Messung kann mit Hilfe einer Eichmessung ausgewertet werden. Diese Eichmessungen führt man mit wässerigen 2K-Dispersionen durch, die eine definierte Menge von NCO-Gruppen in Form der Komponente (b) enthalten, beispielsweise 0 bis 1,5 mol pro kg (a), abgestuft in Schritten von 0,1 mol. Diese 2K-Dispersionen erhält man durch Vermischung einer frischen Ausgangsdispersion (a) mit den jeweiligen Mengen der Komponente (b). Die Eichmessung wird nach der oben beschriebenen IR-Methode unmittelbar nach der Vermischung der beiden Komponenten durchgeführt, damit sichergestellt ist, daß die gesamte zugegebene Menge an NCO-Gruppen zum Zeitpunkt der Messung noch in der Mischung enthalten ist. Durch Vergleich der Höhe der NCO-Bande im Spektrum der gealterten Dispersion mit der Höhe der Banden in den Spektren der Eichmessungen läßt sich der NCO-Gehalt in Form der Komponente (b) in den gealterten 2K-Dispersionen hinreichend genau abschätzen.

Falls in der Praxis die erforderliche Analysentechnik nicht zur Verfügung stehen sollte, so empfiehlt es sich, die gealterte Dispersion zur Reaktivierung mit 100 mol-% NCO-Gruppen in Form der Komponente (b), bezogen auf die in der frischen wässerigen 2K-Dispersion vorhandenen, zu versetzten.

Zwar weisen die die durch Reaktivierung der gealterten 2K-Dispersionen hergestellten erfindungsgemäßen 2K-Dispersionen nicht ganz so gute Klebeeigenschaften auf, wie die frischen 2K-Dispersionen, jedoch reicht deren Eigenschaftsniveau noch für die meisten Anforderungen in der Praxis aus.

Die erfindungsgemäßen wässerigen 2K-Dispersion können handelsübliche Hilfs- und Zusatzstoffe wie Treibmittel, Entschäumer, Emulgatoren, Verdickungsmittel und Thixotropiermittel, Farbmittel wie Farbstoffe und Pigmente enthalten.

Die erfindungsgemäßen Dispersionen eignen sich zur Verklebung unterschiedlichster Substrate nach den auf dem Gebiet der Klebstoffverarbeitung allgemein für wässerige Dispersion bekannten Methoden.

Geeignete Gegenstände sind beispielsweise solche aus Holz, Holzfasern, Metall, Kunststoff oder Leder, z.B. Folien aller Art, insbesondere Möbelfolien oder Kunststoffschaum.

Um besonders wärmestandfeste Verklebungen zu erzielen, geht man dabei im allgemeinen so vor, daß man die folgenden Arbeitsschritte ausführt:
Ia. Herstellung einer Beschichtung Ia durch Beschichtung von Teilen eines Gegenstandes mit der erfindungsgemäßen wässerigen 2K-Dispersion,
IIa. Herstellung einer Beschichtung IIa durch Trocknen der Beschichtung Ia,
IIIa. Herstellung einer Verklebung IIIa durch In-Kontakt-Bringen der Oberfläche der Beschichtung IIa miteinander, mit einem Teil der Oberfläche des Gegenstandes, der nicht mit der Beschichtung IIa beschichtet ist, oder der Oberfläche eines anderen Gegenstandes, wobei die Beschichtung IIa eine Temperatur von 20 bis 200°C aufweist.

Nach einer weiteren bevorzugten Methode zur Verklebung geht man so vor:
Ib. Herstellung einer Beschichtung Ib durch Beschichtung von Teilen eines Gegenstandes mit der wässerigen 2K-Dispersion
IIb. Herstellung einer Beschichtung IIb durch Trocknen der Beschichtung Ib,
IIIb. Herstellung einer Beschichtung IIIb durch Erwärmung der Beschichtung IIb auf eine Temperatur von 30 bis 100°C und
IVb. Herstellung einer Verklebung IVb durch In-Kontakt-Bringen der Oberfläche der Beschichtung IIIb, miteinander, mit einem Teil der Oberfläche des Gegenstandes, der nicht mit der Beschichtung IIa beschichtet ist, oder der Oberfläche eines anderen Gegenstandes, innerhalb von 15 min nach der Abkühlung der Beschichtung IIIb auf eine Temperatur von 30 bis 80°C.

Wegen der begrenzten Topfzeit der wässerigen 2K-Dispersion ist es im allgemeinen erforderlich, die Vermischung der Komponente (b) mit der die Komponente (a) enthaltenden wässerigen Dispersion zur Herstellung der wässerigen 2K-Dispersion und die Herstellung der Beschichtungen IIa bzw. IIb innerhalb eines Zeitraumes von 1 d, bevorzugt innerhalb von 10 h durchzuführen.

Der Zeitraum zwischen der Herstellung der Beschichtungen IIa bzw. IIb und der Herstellung der Verklebungen sollte bevorzugt nicht länger als 10 h betragen.

Die Methode mit den Arbeitsschritten Ib bis IVb hat sich insbesondere bei Polyurethandispersionen bewährt, bei deren Herstellung als Komponente a2 zu mindestens 50 Gew.% ein Polyester aus Adipinsäure und Butan oder Hexandiol verwendet wurde.

Die Herstellung der Beschichtung Ia bzw. Ib erfolgt zweckmäßigerweise nach üblichen Methoden wie Sprühen, Gießen oder Rakeln.

Beim Aufsprühen der Dispersion IIa bzw. IIb kann häufig auf einen separaten Trocknungsschritt verzichtet werden, da beim Sprühen schon ein großer Anteil des Wassers verdampft.

Das Trocknen der Beschichtung Ia bzw. Ib (Herstellung der Beschichtung IIa bzw. IIb) kann bei Raumtemperatur oder bei erhöhter Temperatur, z.B. bei Temperaturen von 40 bis 150°C durch Bestrahlung mit Infrarotlicht durchgeführt werden.

Beschichtungen IIa bzw. IIb enthalten nach der Trocknung üblicherweise weniger als 5 Gew.-% Wasser.

Wird das Trocknen der Beschichtung Ib bei einer Temperatur von mindestens 30°C durchgeführt, so erfolgt dabei gleichzeitig die Herstellung der Beschichtung IIb und IIIb in einem Arbeitsschritt.

Ansonsten kann die Herstellung der Beschichtung IIIb aus der Beschichtung IIb ebenfalls durch Bestrahlung mit Infrarotlicht oder durch Erwärmung in einem Heißluftstrom zu einem späteren Zeitpunkt erfolgen.

Die Herstellung der Verklebungen IIIa bzw. IVb wird üblicherweise in Pressen durchgeführt, wobei üblicherweise ein Druck von 0,05 bis 5 N/mm² angewendet wird. Im Falle der Herstellung der Verklebungen IIIa werden üblicherweise beheizte Pressen eingesetzt.

Das Verfahren der Verklebung durch In-Kontakt-Bringen der Oberfläche der Beschichtungen IIa bzw. IIIb miteinander oder mit anderen Teilen der Oberfläche des Gegenstandes erfordert selbstverständlich eine Flexibilität des Gegenstandes, auf den Beschichtung aufgebracht wurde, wie sie beispielsweise bei Folien vorhanden ist. Von diesem Verfahren wird beispielsweise in der Verpackungsindustrie Gebrauch gemacht. Teile einer mit den Beschichtungen IIa bzw. IIIb beschichteten Folie werde beispielsweise gefaltet und die übereinanderliegenden Folienteile an geeigneten Stellen so verklebt, daß Beutel oder Taschen entstehen.

Verklebungsverfahren, wobei die Beschichtung IIa bzw IIIb mit der Oberfläche eines anderen Gegenstandes verklebt wird, werden beispielsweise zur Herstellung von Verbunden aus Hartfaserplatten mit PVC-Folie eingesetzt. Diese Verbundmaterialien finden beim Automobilinnenausbau Verwendung. Besonders hohe Verbundfertigkeiten werden erreicht, wenn die Oberfläche des anderen Gegenstandes ebenfalls mit einer Beschichtung IIa bzw. IIIb versehen ist. Die Materialien der miteinander zu verklebenden Gegenstände können gleich- oder verschiedenartig sein.

Die erfindungsgemäßen wässerigen 2K-Dispersionen zeichnen sich besonders dadurch aus, daß sie eine besonders lange Topfzeit aufweisen, d.h. sie lassen sich über eine längere Zeit hinweg lagern, ohne daß sie für die Verklebung wärmestandfester Klebstoffverbunde unbrauchbar würden. Weiterhin lassen sie sich nach Ablauf der Topfzeit reaktivieren, d.h. sie sind nach Zusatz von Polyisocyanat weiterhin zur Herstellung von Verklebungen mit hoher Wärmestandfestigkeit geeignet.

### Abkürzungen

- RT =: Raumtemperatur
- OHZ =: Hydroxylzahl
- TDI =: Toluylendiisocyanat
- HDI =: Hexamethylendiisocyanat
- PUD-Salz=: Na-Salz des Michael-Addukts aus Acrylsäure und Ethylendiamin
- DBTL =: Dibutylzinndilaurat
- Festst. =: Feststoffgehalt.

Die Viskositäten der Dispersionen wurden bei einer Temperatur von 20°C und einer Schergeschwindigkeit von 250s⁻¹ mit einem Rotations-Rheometer mit konzentrischen Zylindern (Spindeldurchmesser38,7mm, Becherdurchmesser: 42,0mm) vermessen.

Die Teilchengröße der Latexpartikel (LD) wurde indirekt über Trübungsmessungen bestimmt. Hierzu wurde die Trübung einer Dispersion mit einem Feststoffgehalt von 0,01Gew.-% relativ zu dest. Wasser bei einer Schichtdicke von 2,5cm und bei Raumtemperatur bestimmt.

### Herstellung der Ausgangsdispersion (a)

718,8 g eines Polyesters aus Adipinsäure und Butandiol-1,4 (OHZ = 44,5) wurden mit 0,12 g DBTL in 191,2 g Aceton mit 32,98 g TDI bei 65°C 1 h umgesetzt. Dann wurden 31,8 g HDI zudosiert und weitere 70 min umgesetzt. Es wurde mit 766,4 g Aceton verdünnt und dabei auf 50°C abgekühlt. Der NCO-Wert betrug 0,54 %. Es wurden 40,95 g PUD-Salz 40 %ig in Wasser zugegeben und mit 1200 g VE-Wasser dispergiert. Das Aceton wurde im Vakuum abdestilliert und der Feststoffgehalt auf 40 % eingestellt.

### Analysendaten:

- Feststoff:: 40 %
- LD:: 84,8
- Visk.:: 38,8 mPas
- pH:: 8,5.

### Herstellung der wässerigen 2K-Dispersionen und deren anwendungstechnische Prüfung

### Beispiele 1 bis 4

Zu 100 Teilen Ausgangsdispersion (a) wurden 2 Gew.-Teile Triethanolamin gegeben und 5 min gerührt. Anschließend wurde der Ansatz mit 2 Gew.-% eines Assoziativverdickers (Collacral® VL) angedickt und mit 4 Gew.-Teilen einer 80 gew.-%igen Lösung eines wasserdispergierbaren Polyisocyanates in Propylencarbonat versetzt. Die Dispersionen gemäß Beispiel 1 bis 3 wurden anschließend die in Tabelle 1 angegebene Zeit gelagert ("offene Zeit"), bevor sie der anwendungstechnischen Prüfung unterzogen wurden, d.h. auf den Prüfkörper aufgetragen wurden. Bei Beispiel 4 wurde wie bei Beispiel 3 vorgegangen, jedoch wurden unmittelbar vor der Verarbeitung der Dispersion nochmals 4 Gew.-% der Lösung des wasseremulgierbaren Polyisocyanates eingerührt.

Die Verarbeitung der wässerigen 2K-Dispersionen erfolgte durch Auftrag mit einem Rakel (Auftragsgewicht 60 g/m², naß) auf MDF-Platten (middle-dense-fibre-Platten) mit einer Fläche 140 x 50 mm². Es wurde 1 Stunde bei RT getrocknet. Anschließend wurde mit einer PVC-Möbelfolie (Dicke = 450 µm) verklebt, indem nach 10 sec bei 80°C unter einem Druck von 0,6 N/mm² verpreßte.

Nach 24 h erfolgte die Prüfung der Wärmestandfestigkeit. Dazu wurden die Prüfkörper zunächst 3 min bei 80°C getempert. Anschließend wurde die PVC-Folie in einem Abschälwinkel von 180°C mit einem 500 g-Gewicht (bzw. 1000 g) auf der 50 mm breiten Seite belastet und 15 min bei 80°C getempert. Es wurde die Ablaufstrecke in mm gemessen notiert.

Zum Vergleich wurden die beispielhaften Versuche wiederholt, jedoch wurde den Ausgangsdispersionen kein Triethanolamin zugesetzt. Die Vergleichsversuche sind jeweils mit einem "V" gekennzeichnet.

**Tabelle 1**

| Beispiel | offene Zeit [h] | Ablaufstrecke bei Gewicht 500 g [mm] | Ablaufstrecke bei Gewicht 1000 g [mm] |
|---|---|---|---|
| 1 (V) | 0 | 5 | 6 |
| 1 | 0 | 3 | 8 |
| 2 (V) | 5 | 2 | 20 |
| 2 | 5 | 2 | 11 |
| 3 (V) | 24 | abgelaufen | abgelaufen |
| 3 | 24 | 25 | 79 |
| 4 (V) | 24 | 8 | abgelaufen |
| 4 | 24 | 6 | 18 |
| offene Zeit: Zeit zwischen Zeitpunkt der Isocyanat-Zugabe und Rakelauftrag auf MDF-Platte | | | |

## Patentansprüche

1. Wässerige 2K-Dispersionen enthaltend
a) ein Polyurethan, das anionische Gruppen trägt, die die Wasserdispergierbarkeit des Polyurethans bewirken (Komponente a),
b) 0,04 bis 1,5 mol NCO-Gruppen in Form eines wasseremulgierbaren Polyisocyanates (Komponente b) pro kg der Komponente (a) und
c) 0,05 bis 40 mol tertiäre Aminogruppen in Form eines tertiären Alkanolamins (Komponente c) pro mol NCO-Gruppen in Form der Komponente (b).

2. Wässerige 2K-Dispersionen nach Anspruch 1, wobei das Polyurethan (Komponente a) aufgebaut ist aus
a1) Diisocyanaten mit 4 bis 30 C-Atomen,
a2) Diolen, von denen
a2.1) 10 bis 100 mol-%, bezogen auf die Gesamtmenge der Diole (a2), ein Molekulargewicht von 500 bis 5000 aufweisen, und
a2.2) 0 bis 90 mol-%, bezogen auf die Gesamtmenge der Diole (a2), ein Molekulargewicht von 60 bis 500 g/mol aufweisen,
a3) von den Monomeren (a1) und (a2) verschiedene Monomere mit wenigstens einer Isocyanatgruppe oder wenigstens einer gegenüber Isocyanatgruppen reaktiven Gruppe, die darüberhinaus wenigstens eine anionische Gruppen oder eine potentiell anionische Gruppe tragen, wodurch die Wasserdispergierbarkeit der Polyurethane bewirkt wird und
a4) gegebenenfalls weiteren von den Monomeren (a1) bis (a3) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
a5) gegebenenfalls von den Monomeren (a1) bis (a3) verschiedenen einwertigen Verbindungen mit einer reaktiven Gruppen, bei der es sich um eine alkoholische Hydroxylgruppe, eine primäre oder sekundäre Aminogruppen oder eine Isocyanatgruppe handelt.

3. Wässerige 2K-Dispersionen nach Anspruch 1 oder 2, wobei es sich bei der Komponente (b) um ein Polyisocyanat mit einem Gehalt an Polyethylen- oder Polypropylenoxidgruppen handelt.

4. Wässerige 2K-Dispersionen nach den Ansprüchen 1 bis 3, wobei es sich bei dem tertiären Alkanolamin um Triethanolamin handelt.

5. Verfahren zur Herstellung von wässerigen 2K-Dispersionen nach den Ansprüchen 1 bis 4 durch
- Herstellung einer frischen wässerigen 2K-Dispersion durch Vermischung der Komponente (b) mit einer wässerigen Dispersion, enthaltend ein Polyurethan (a), wobei dieser Dispersion zu keinem früheren Zeitpunkt wirksame Mengen an Komponente (b) zugesetzt worden waren (frische Ausgangsdispersion a) und der Komponente (c), wobei die Komponente (c) in der frischen Ausgangsdisperion (a) schon zu einem früheren Zeitpunkt enthalten gewesen sein kann und wobei die Mengenverhältnisse so gewählt werden, daß unmittelbar nach der Herstellung der frischen wässerigen 2K-Dispersion sie
b) 0,04 bis 1,5 mol NCO-Gruppen in Form der Komponente (b) pro kg der Komponente (a) und
c) 0,05 bis 40 mol Komponente (c) pro mol NCO-Gruppen in Form der Komponente (b) enthält,
- Lagerung der frischen wässerigen 2K-Dispersionen, bis sich eine gealterte 2K-Dispersion gebildet hat, deren Gehalt an NCO-Gruppen in Form der Komponente (b) auf weniger als 50 mol-% NCO-Gruppen in Form der Komponente (b), bezogen auf den ursprünglichen Gehalt an (b) in der frischen wässerigen 2K-Dispersion, beträgt; und
- Vermischung der gealterten wässerigen 2K-Dispersion mit einer solchen Menge an NCO-Gruppen in Form der Komponente (b), daß deren Gehalt 50 bis 200 mol-% pro kg der Komponente (a), bezogen auf den ursprünglichen Gehalt an (b) in der frischen wässerigen 2K-Dispersion, beträgt.

6. Wässerige 2K-Dispersion erhältlich nach dem Verfahren gemäß Anspruch 5.

7. Verfahren zum Verkleben von Gegenständen, dadurch gekennzeichnet, daß man die folgenden Arbeitsschritte ausführt:
Ia. Herstellung einer Beschichtung Ia durch Beschichtung von Teilen eines Gegenstandes mit der wässerigen 2K-Dispersion nach den Ansprüchen 1 bis 4 und 6,
IIa. Herstellung einer Beschichtung IIa durch Trocknen der Beschichtung Ia,
IIIa. Herstellung einer Verklebung IIIa durch In-Kontakt-Bringen der Oberfläche der Beschichtung IIa miteinander, mit einem Teil der Oberfläche des Gegenstandes, der nicht mit der Beschichtung IIa beschichtet ist, oder der Oberfläche eines anderen Gegenstandes, wobei die Beschichtung IIa eine Temperatur von 20 bis 200°C aufweist.

8. Verfahren zum Verkleben von Gegenständen, dadurch gekennzeichnet, daß man die folgenden Arbeitsschritte ausführt:
Ib. Herstellung einer Beschichtung Ib durch Beschichtung von Teilen eines Gegenstandes mit der wässerigen 2K-Dispersion nach den Ansprüchen 1 bis 4 und 6,
IIb. Herstellung einer Beschichtung IIb durch Trocknen der Beschichtung Ib,
IIIb. Herstellung einer Beschichtung IIIb durch Erwärmung der Beschichtung IIb auf eine Temperatur von 30 bis 100°C und
IVb. Herstellung einer Verklebung IVb durch In-Kontakt-Bringen der Oberfläche der Beschichtung IIIb, miteinander, mit einem Teil der Oberfläche des Gegenstandes, der nicht mit der Beschichtung IIa beschichtet ist, oder der Oberfläche eines anderen Gegenstandes, innerhalb von 15 min nach der Abkühlung der Beschichtung IIIb auf eine Temperatur von 30 bis 80°C.

9. Verklebte Gegenstände, erhältlich nach den Verfahren nach Anspruch 7 oder 8.
